# EUROPEAN PATENT SPECIFICATION

(11) **EP 0 575 299 B1**
(45) Date of publication and mention of the grant of the patent: **16.04.1997**
(21) Application number: 93850123.6
(22) Date of filing: 10.06.1993
(51) Int. Cl.: B05D 7/24

(54) **Barrier film and process for the production thereof**
Sperrfilm und Verfahren zu seiner Herstellung
Film barrière et procédé pour sa production

(30) Priority: 15.06.1992 SE 9201827
(43) Date of publication of application: 22.12.1993
(73) Proprietor: AB AKERLUND & RAUSING, S-221 01 Lund (SE)
(72) Inventor: Nideborn, Karl, S-223 51 Lund (SE)
(74) Representative: Kristiansen, Alf P.

(56) References cited:
- WO-A-91/16148
- DE-A- 3 521 625
- US-A- 4 692 347
- US-A- 4 756 964
- US-A- 4 957 062
- H. YASUDA, Plasma Polymerisation, Academic Press, 1985, page 359.

## Description

### TECHNICAL FIELD:

The present invention relates to a process for the production of a barrier film and such a film. The film is made of polymers having some permeability for gases, for example oxygen gas, which film shall be provided with a barrier against such permeability. The process is intended to bring about this barrier by means of a covering which is produced under vacuum from a plasma of organic substances.

### PRIOR ART:

Different kinds of packing materials, for example films of polymers for packing food have all some permeability for gases. This is of course a disadvantage which one wants to avoid and which means that water or other gases can permeate through the package or that for example oxygen can penetrate in through the packing material and deteriorate the quality of the packed food. These circumstances do also apply to other cases than food, for instance medicines, **etc**. The package material which has this disadvantage does not necessarily have to be films but can be of a thicker embodiment and comprises for example bottles.

One way to make these packing materials and even other materials impervious for the substances which one wants to exclude is to cover them with an impermeable film for these substances. This can be done in different ways by laminating, covering with some dense medium, or for example covering by a material from a plasma by means of electrical deposition methods. A plasma is a state which is defined as an ionized gas. The plasma consists of neutral atoms and molecules, radicals and electrons and positive ions. The part of the active particles (radicals, ions, electrons) of the total amount of particles is low, in an amount of order of 1/10⁶. Plasma processes are characterized in that they do not occur in thermal equilibrium, that means that the different components (ions, electrons and neutral particles), have different temperatures. The substrate may have a temperature of 10-50°C, the ions and the neutral particles a temperature of 100-500°C and the electrons a temperature of 10.000-20.000°C. The plasma is created by a radio frequency and the gas which is present at a low pressure is ionized. The ionizing means that the gas molecule is divided into ions, electrons and radicals. The effect of the radio frequency decides how much the molecule is divided in the plasma.

One process for the production of a barrier on a plastic film by means of a covering from a plasma is described in the US-patent 4 756 964. According to this patent one seals plastic films consisting of preferably polycarbonate and polyethylene, but also other films by covering with amorphous carbon for making a barrier film whereby one first treats the surface of the polymer substrate with a plasma of an inert gas during a time which is sufficient for improving the adhesive properties of the surface of the substrate and thereafter covers amorphous carbon on this surface by bombardment of ions from a gaseous plasma of a hydrocarbon gas. The inert gas may consist of argon and one treats the surface on the substrate with this argon plasma during a time of 1-10 minutes before starting the covering with amorphous carbon which takes a few minutes more. At a gas pressure in the plasma of below 1 x 10⁻¹ Torr, an electric effect for the production of the plasma is about 200 W and a bias voltage of about -250 V a film of amorphus carbon having a thickness of 200-800 angstrom is obtained. This means an appreciable improvement of the oxygen penetration in the plastic film compared to a not covered film.

What happens in the hydrocarbon gas in the plasma is that this is bombarded by electrons so that it dissociates and is ionized. During one part of one half of the radio frequency cycle the flexible polymeric substrate is in a region when the applied electrical field attracts electrons. This negative charge from the accumulated electrons gives a potential which attracts positive ions to the negatively charged surface. When the positive ions impinges against the negatively charged surface, the charge is neutralized by electrons. As the positive ions move slower than the electrons the polymeric surface will have a net negative charge during the whole radio frequency cycle. The positive ions must add sufficient energy to the surface that is to be covered. They are accelerated against the surface through the negative charge and the reversal of the field at the surface must be sufficiently quick to maintain the surface at a high net negative charge compared to the plasma. According to the known technique a suitable frequency to bring about this is between 0,5 MHz to 100 Ghz. (Gigaherz).

### TECHNICAL PROBLEM:

Though an improvement of the barrier properties of plastics through the above said processes can be obtained these are however not complete. Thus it is necessary according to the known technique to treat the surface which is to be covered by for example an argon plasma which takes time and makes the apparatus for performing the process unnecessary complicated. After the pre-treatment the real covering is then carried out which results in a film of amorphous carbon. This carbon improves as said above, the barrier properties but not in a sufficient degree and a further drastic improvement of these properties is therefore highly appreciated.

### THE SOLUTION:

According to the present invention one has therefore brought about a process for the production of a barrier film on one or more even polymer surfaces in a vacuum chamber from a plasma containing organic radicals and ions of methane, ethane, propane or the unsaturated hydrocarbons ethene, propene and butene, and the process is characterized in that a pressure of 10⁻¹ - 3 Torr, preferably 100-600 mTorr and an electrical bias voltage of -150 to -300 V and a radio frequency of between 50Hz and 3 x 10⁹ Hz is applied, without pretreatment with argon.

According to the invention it is suitable that the even polymer film consists of a biaxially oriented polyester film, polypropene or polythene.

It is according to the invention enough to obtain a sufficiently thick polymer film to carry out the covering during a period of time of 20 seconds to 2 minutes.

The radio frequency which is preferably used for bringing about the plasma is 13,56 MHz.

The invention further includes a barrier film produced according to the process.

### PREFERRED EMBODIMENT:

According to the present invention one covers a substrate of polymer material without preceding treatment with argon plasma. One chooses instead polymers having an even surface. From such polymers one can primarily mention biaxially oriented polyester which is oriented during the production by being blown up in the shape of a sausage skin which thereafter is cut and rolled together. Other substrates can be polypropene or polyethene.

For the production of plasmas preferably a radio frequency of 13,56 MHz is used. One has thereby a possibility to conduct the level of the bias voltage, that is the voltage difference between earth and the electrode on which the substrate lies. One uses a reactor which gives a bias voltage which is self induced.

According to the invention a covering gas of methane, ethane, propane, ethene, propene or butene is used. Methane gives an especially fine polymer coverage. At an effect of 150-250 W and a bias voltage of -150 to (-300) V and a pressure of 100-600 mTorr and a gas flow of 200-500 ml/minute a growing speed of polymer on the even polymer film surface of about 600 angstrom/minute is brought about. During 1-2 minutes a sufficiently thick film is thus formed which gives the polymer film surface an appreciably better oxygen barrier. The polymer surface consisting of a biaxially oriented polyester film and a plasma polymer covering of 513 angstrom thickness receives an oxygen barrier of the size of 2,56 cm³/m², day for a covered 12 µm thick polyester. The water vapour barrier is improved for said film from 8 g/m², day to 0,65 g/m², day. The oxygen permeability was measured with an Oxtran 1000 oxygen permeability test apparatus. This gives the permeability of oxygen as a number of cm³ oxygen/m² film and day. The pressure of the oxygen is then set to an atmosphere.

Table 1 shows the result of five essays with covering of methane on a biaxially oriented polyester film having a thickness of 12 µm. This film had an oxygen gas barrier of 105,00 cm³/m² day and a water vapour barrier of 8,00 g/m² day before the covering. The table shows the different parameters of the essays and the results obtained. As appears a drastic improvement of the oxygen gas and water vapour barriers were obtained.

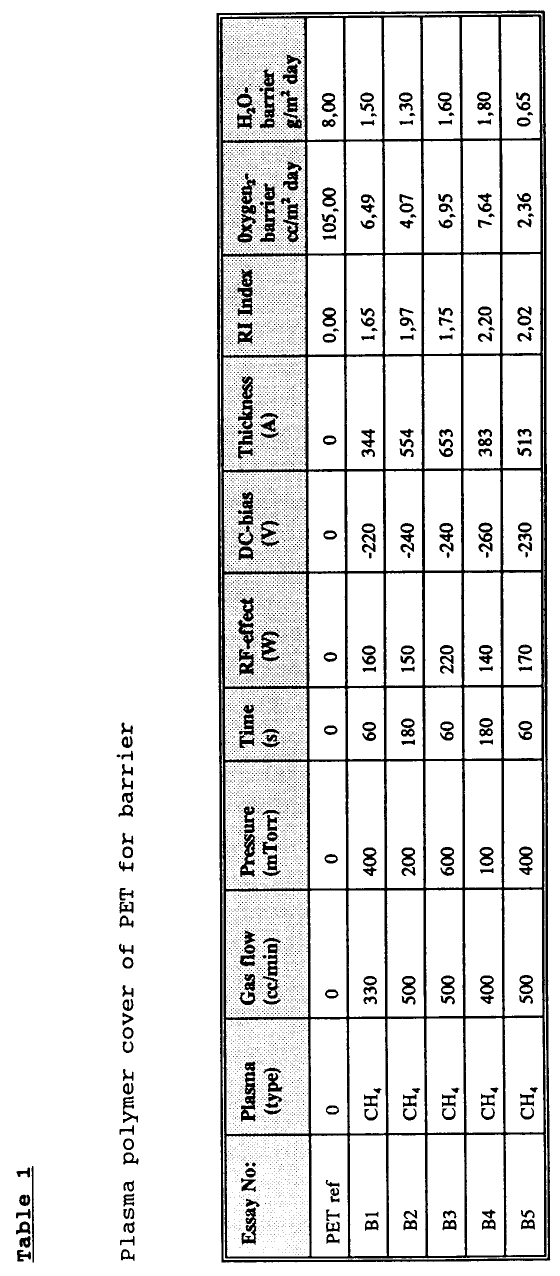

One should also observe the high refraction index (RI-index) which indicates that the film is very compact.

Generally it can be said that a high effect from the radio frequency divides more covalent bonds of the monomer and the polymer which is formed is characterized in that it is very dense and has a very high degree of cross bonds. The plasma polymers have generally a structure which has very few similarities with the monomer. A low effect gives more intact monomers and therethrough a polymer having a great similarity with the monomer but which also is less dense. The process of the plasma polymerization is characterized in that polymerizable monomers do not have to be functional, that is methane and ethane can be polymerized in the same way as ethene and propene. The speed of polymerization is higher for functional monomers as less energy is required for ionizing and dividing the monomer.

Table 2 shows that one really has obtained a polymer layer on the surface instead of amorphous carbon as according to said American patent. This illustrates that through a diagram obtained by a so called SIMS test (Secondary ion mass Spectroscopy), the presence of substances in dependence of their atomic weights. Carbon which has an atomic weight of 12 is present as appears in a very small extent and compounds having a molecular weight of somewhat under 30 and about 40 and 55 is predominant, that is compounds being multiples of carbon. These polymers gives a much better barrier against oxygen than a barrier consisting of amorphous carbon. This can be seen from the above said American patent, column 6, where the barrier values are given. A recalculation to metric units gives that a polymer coverage according to the present invention gives about three times better oxygen barrier than the covering according to known patent specification.

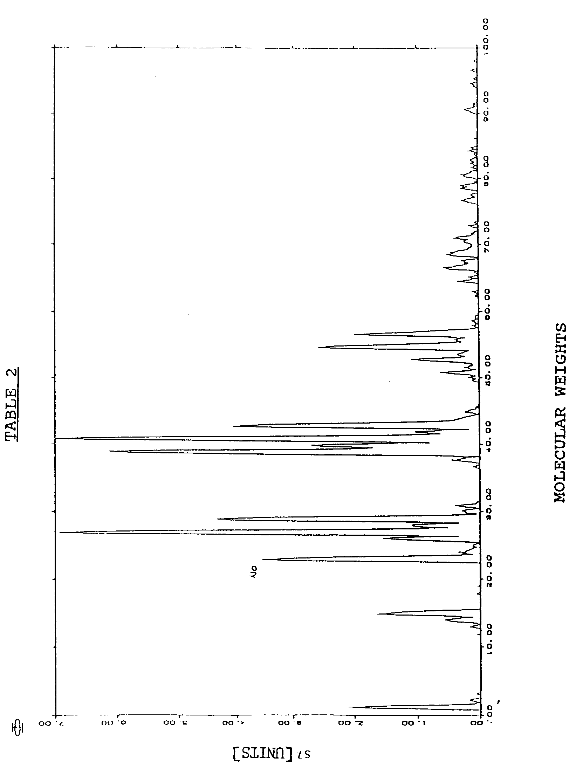

## Claims

1. Process for the production of a barrier film on one or more even polymer film surfaces in a vacuum chamber from a plasma containing organic radicals and ions of methane, ethane, propane or the unsaturated hydrocarbons such as ethene, propene and butene, characterized in that a pressure of 10⁻¹ - 3 Torr, preferably 100-600 mTorr and an electrical bias voltage of -150 to -300 V and a radio frequency of between 50 Hz and 3 x 10⁹ Hz is applied, without pretreatment with argon.

2. Process according to claim 1,
**characterized** in that the even polymer film consists of a biaxially oriented polyester film, polypropene or polyethene.

3. Process according to any of the claims 1 or 2,
**characterized** in that the covering is carried out during a period of time of 20 seconds - 2 minutes.

4. Process according to any of the claims 1-2,
**characterized** in that the radio frequency which is used for bringing about the plasma is 13,56 MHz.

5. Barrier film produced according to any of the preceeding claims.

## Patentansprüche

1. Verfahren zur Herstellung eines Sperrfilms auf einem oder mehreren gleichmäßigen bzw. ebenen Filmoberflächen in einer Vakuumkammer aus einem Plasma, das organische Radikale und Ionen des Methans, Ethans, Propans oder der ungesättigten Kohlenwasserstoffe des Ethens, Propens und Butens enthält, dadurch gekennzeichnet, daß ein Druck von 10⁻¹ - 3 Torr, bevorzugt 100-600 mTorr, und eine elektrische Gittervorspannung von -150 bis -300 V und eine Hochfrequenz von 50 Hz - 3 x 10⁹ Hz angewandt wird, ohne daß eine Vorbehandlung mit Argon stattfindet.

2. Verfahren nach Anspruch 1, dadurch gekennzeichnet, daß der gleichmäßige Polymerfilm aus einem biaxial angeordneten Polyesterfilm, Polypropen oder Polyethen besteht.

3. Verfahren nach einem der Ansprüche 1 oder 2, dadurch gekennzeichnet, daß die Beschichtung während einer Zeitdauer von 20 Sekunden - 2 Minuten durchgeführt wird.

4. Verfahren nach einem der Ansprüche 1-2, dadurch gekennzeichnet, daß die zur Erzeugung des Plasmas angewandte Hochfrequenz 13,56 MHz beträgt.

5. Sperrfilm, hergestellt nach einem der vorhergehenden Ansprüche.

## Revendications

1. Procédé de production d'un film formant barrière sur une ou plusieurs surfaces de films polymériques uniformes dans une chambre à vide à partir d'un plasma contenant des radicaux organiques et des ions de méthane, éthane, propane ou d'hydrocarbures insaturés tels que l'éthène, le propène et le butène, caractérisé en ce qu'une pression de 10⁻¹ à 3 torr, de préférence de 100 à 600 mtorr et une tension de polarisation électrique de -150 à -300 V et une radiofréquence comprise entre 50 Hz et 3 x 10⁹ Hz sont appliquées, sans prétraitement à l'argon.

2. Procédé selon la revendication 1, caractérisé en ce que le film polymérique uniforme consiste en un film de polyester orienté biaxialement, en polypropène ou en polyéthène.

3. Procédé selon l'une quelconque des revendications 1 et 2, caractérisé en ce que le recouvrement est accompli pendant une durée de 20 s à 2 min.

4. Procédé selon l'une quelconque des revendications 1 et 2, caractérisé en ce que la radiofréquence qui est utilisée pour former le plasma est de 13,56 MHz.

5. Film formant barrière produit selon l'une quelconque des revendications précédentes.
